# EUROPEAN PATENT SPECIFICATION

(11) **EP 4 160 037 B1**
(45) Date of publication and mention of the grant of the patent: **21.02.2024**
(21) Application number: 21199694.7
(22) Date of filing: 29.09.2021
(51) Int. Cl.: F16D 9/06, F16D 7/02

(54) **TORQUE LIMITING COUPLING**
DREHMOMENTBEGRENZUNGSKUPPLUNG
ACCOUPLEMENT DE LIMITATION DE COUPLE

(43) Date of publication of application: 05.04.2023
(73) Proprietor: Voith Patent GmbH, 89522 Heidenheim (DE)
(72) Inventor: Thielen, Jochen, 90425 Nürnberg (DE); Bergström, David, 82494 Hudiksvall (SE); Albinsson, Andreas, 82470 Delsbo (SE)
(74) Representative: Voith Patent GmbH - Patentabteilung

(56) References cited:
- EP-A1- 2 233 762
- EP-A2- 2 837 844
- EP-A2- 2 896 845
- CN-A- 103 027 373
- US-B2- 7 963 714

## Description

The present invention relates to a torque limiting coupling comprising a first shaft, a shear plate fixedly connected with the first shaft and a coupling ring arranged coaxially to the first shaft, where the coupling ring comprises a lateral surface which is in contact with a lateral surface of the first shaft, where the coupling ring has a double-walled section with an internal annular pressure fluid chamber, designed in such a way, that this section increases its radial thickness when the fluid chamber is filled with pressurized fluid and thereby increases the pressure forces and the friction forces between the lateral surfaces of the coupling ring and the first shaft in order to allow torque transfer. When the fluid chamber is not filled with pressurized fluid, the coupling ring transfers no torque anymore, because the lateral contact surface of the coupling ring can rotate relatively to the lateral surface of the first shaft due to no or reduced friction forces.

The coupling ring comprises furthermore a shear tube closing the pressurized fluid chamber to hold the pressure, whereby the shear plate is designed to cut off a tip of the shear tube in order to open the pressure fluid chamber if the first shaft is slipping relatively to the coupling ring, which is the case, when the torque is higher than a predefined maximum transferable torque given by the fluid pressure and the design of the coupling. By cutting of the tip of the shear tube the pressure fluid chamber is opened and the fluid pressure is relieved. Thereby the surface pressure between the lateral surface of the coupling ring and the first shaft is reduced and no torque is transferred. With this configuration the drive train is protected against overload for example in case of blocking on the load side of the drive train or in case of too high torque.

After refilling the pressure fluid chamber with pressurized fluid and closing the opening, for example with a new shear tube, the coupling is reset and again transfers torque between first shaft and coupling ring.

Such torque limiting couplings are known in prior art for example disclosed in US 4,264,229 as shown in the embodiment according to figure 5. These couplings are often used as safety couplings to protect a drive train from overload. That is especially important for drive trains where a blockage could occur at the load side.

EP2837844 is also considered relevant prior art, disclosing a torque limiting coupling with hydraulic pressure creating a radial clamping, in which a shear valve is also provided.

These couplings comprises a coupling ring and the thickness of the coupling ring can be increased by a pressurized fluid chamber within that ring. So sufficient contact pressure is created for transferring torque. Once the fluid pressure is relieved, the contact pressure and with that the friction forces are low, torque transfer is no longer possible. The shaft and the coupling ring rotate relatively to each other.

The torque limiting couplings need to provide a high reliability, should take not too much space for installation and should be easily refillable after release of the coupling. These are in many applications diverging demands. The correct assembly is very difficult and critical regarding functionality. It needs to become easier and less sensitive to failures.

The task of the invention is an improvement of the torque limiting coupling by saving space for installation, increasing reliability and allowing an easier assembly, as well as a reduction of costs in order to overcome the above mentioned problems.

The solution for this task is given by a torque limiting coupling according to claim 1. Further advantageous features for embodiments according to the invention are found in the dependent claims.

The inventive torque limiting coupling is characterized in that the first shaft comprises a conical connector and that the shear plate is fixed by one central bolt to the first shaft, by pressing a conical bushing, which is connected to or part of the shear plate, against the conical connector. With this inventive design the installation and the refilling after release become easier while the coupling is very reliable. Also for disassembly the torque limiting coupling is advantageous in contrast to the known design.

One advantage is that the shear plate is reliably connected to the first shaft with low space demand for installation. The conical connector and the appropriate conical bushing of the shear plate provides a high friction force between the first shaft and the shear plate even at a quite low tightening torque of the bolt. That allows to use a smaller bolt, which on one hand saves space for the components and on the other hand gives the possibility to use smaller tools for assembly. In many cases not only space for the components itself is limited but also space for handling the tools during assembly. Furthermore the assembly is easier and faster.

A further advantage of this solution is the better access for refilling after release of the coupling. After the release of the coupling the shear tube is cut off and needs to be replaced. In many cases the shear plate blocks access to the bore of the shear tube. With the inventive design the shear plate is fixed to the first shaft by only one central bolt for fastening. That allows always to bring a recess of the shear plate over the position of the shear tube just by loosen the bolt and rotating only the shear plate independently to the first shaft. After replacing the shear tube the shear plate can be fixed in any angular position. So the refilling and the reset of the coupling can happen with minimum effort.

For access to the shear tube it is not necessary to remove the whole shear plate and to reinstall it again or to rotate the first shaft relatively to the coupling ring to get access. As it would be necessary, if more bolts are used to mount the shear plate. Both of these options cause trouble in a still-standing drive train and makes the refilling more complicated.

Also for other maintenance work it is advantageous to have with the new design an easier way for disassembly and re-assembly.

Explicitly mentioned is that according to the invention as claimed the conical connection between first shaft and shear plate can be a conical connector like a pin at the first shaft and a conical bushing with an appropriate cavity. Or vice versa with a conical bushing forming a conical pin and a conical connector formed as an appropriate conical cavity in the first shaft.

A preferred pressure fluid for the coupling is oil or any other fluid suitable for this function.

In a preferred embodiment the shear plate comprises at least two recesses each with a shear edge suitable to cut off the shear tube. An improved balancing is achieved with two recesses in opposite position.

In a further preferred embodiment the shear plate comprises at least one recess, especially preferred at least two recesses, giving an open area with an opening angle β with reference to the axis of at least 20°, preferred of at least 40°. With such an enlarged recess the access to the coupling ring is further improved, especially for access to the shear tube and simultaneously to the pressure fluid port. By using at least two such enlarged recesses, especially in opposite position, the balancing is improved.

Additionally to the recesses with shear edge, it can be advantageous to have at least two further recesses to give also simultaneously access to a further port or screw, for example to a lubrication oil port. So a full dismounting of the shear plate can be avoided, even if lubrication oil is changed after a release of the coupling.

Furthermore, it is advantageous for the torque limiting coupling if the conical connector has an angle of the taper α of more than 6°, preferred of more than 12°. With such a lower limit for the angle α it is avoidable that the conical connection becomes self-retaining. Depending on the friction coefficient, which is for steel-steel contact normally in the range between 0.1 and 0.2, the limit for self-retaining is region of 5° or up to 11°.

By avoiding self-retaining the disassembly easier and the shear plate is rotatable with low effort for getting better access to the coupling ring.

In another preferred embodiment has the conical connector an angle of the taper α of less than 35°, preferred of less than 25°. With such an upper limit for the angle α the pressing effect in the conical connection can be optimized. The required strength for the connection can be reached even with lower bolt preload, so that a smaller bolt and a moderate tightening torque can be used.

It is an advantage if the conical connector and the shear plate are made in one piece. By this the handling of the shear plate is easier and the assembly and the rotation of the shear plate is possible with minimum effort. Especially in confined spaces in a drive train this is preferred.

A further preferred embodiment is a torque limiting coupling comprising additionally a second shaft which is connected to the coupling ring, where the coupling ring comprises a coupling sleeve which is arranged in radial direction (R) between the first shaft and the second shaft, and where the coupling sleeve is the double-walled section with the internal annular pressure fluid chamber. In this embodiment the coupling sleeve transfers the torque between the lateral surfaces of the first shaft and the second shaft. The second shaft is preferred formed by a hollow shaft. The advantage is that the coupling ring is a separate component. First and second shaft can be part of the drive side or the load side of the drive train.

In a further preferred embodiment for the coupling the length L of the coupling sleeve is between 50 mm and 250 mm, preferred between 80 mm and 180 mm. With that length there is on the one hand enough contact area for the torque transfer and on the other hand enough length for adjustment of the position of the second shaft. As the length L is considered the length of the outer surface in longitudinal direction where the coupling sleeve is in contact with the second shaft.

In order to create enough contact pressure by changing the thickness of the coupling sleeve it is advantageous that the thickness t of the coupling sleeve is between 10 mm and 30 mm. Thus results in enough stability and enough flexibility of the sleeve to create the necessary surface pressure. Decisive for the transferrable torque are the mechanical properties, such as diameter, length and thickness of the coupling sleeve as well as the fluid pressure.

Further, it is advantageous that the coupling comprises a first roller bearing between the first shaft and the second shaft or between the first shaft and the coupling ring, and that it comprises a second roller bearing between the first shaft and the coupling ring. With these roller bearings the second shaft can rotate around the first shaft with reduced friction, when the pressure fluid chamber is not filled with pressurized fluid. That reduces the risk of damages for the contact surfaces.

In an especially preferred embodiment the second shaft is a hollow shaft of a rotor of an electric motor. Due to the improved possibilities for adjustment of the second shaft it is possible to directly include the hollow shaft of a rotor in the torque limiting coupling.

Furthermore, it is possible that the first shaft is formed by the driven shaft of an electric motor to be connected to a load or a gear.

That feature allows an integration of the torque limiting coupling in an electric motor and saves installation space in applications.

In a preferred application, the torque limiting coupling is designed to be used in the main drive train of a tunnel boring machine, especially in an electric motor of the main drive. Particularly in tunnel boring machines it is important to protect the drive train reliable against overload. But it is also necessary to save space for installation and simplifies the assembly.

The following figures show preferred embodiments according to the invention. The mentioned features also can be combined in different ways and are not meant to be limited to the concretely shown combinations.

The figures show:
- **Fig.1**: Schematic view of an embodiment according to the invention
- **Fig.2a,b**: Embodiment according to the invention (front view, sectional view)
- **Fig.3a,b**: Further embodiment according to the invention with coupling sleeve

Following, the figures are described in detail. Same reference numbers mean same or similar parts or components.

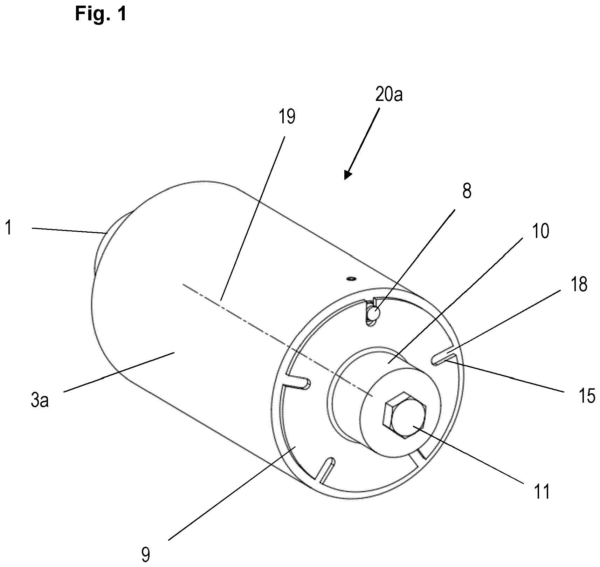

In **Fig.1** a preferred embodiment according to the invention is shown. The torque limiting coupling 20a comprises the first shaft 1, the coupling ring 3a and the shear plate 9 tightly connected to the first shaft 1 with a central bolt 11. The coupling ring 3a is positioned concentric to the first shaft 1 with its axis 19.

The central bolt 11 presses the conical bushing 10 onto the not visible conical connector 1.1 of the first shaft 1. The shear plate 9 comprises several recesses 18 each with a shear edge 15. In case of a too high torque, higher than the maximum limit for the transferable torque, the first shaft 1 slips relatively to the coupling ring 3a. Thus, the shear plate 9 tightly connected to the first shaft 1 cuts off the tip of the shear tube 8 by one of the shear edges 15. For balancing purpose there can be several recesses 18 in the shear plate, which are regularly distributed over the circumference.

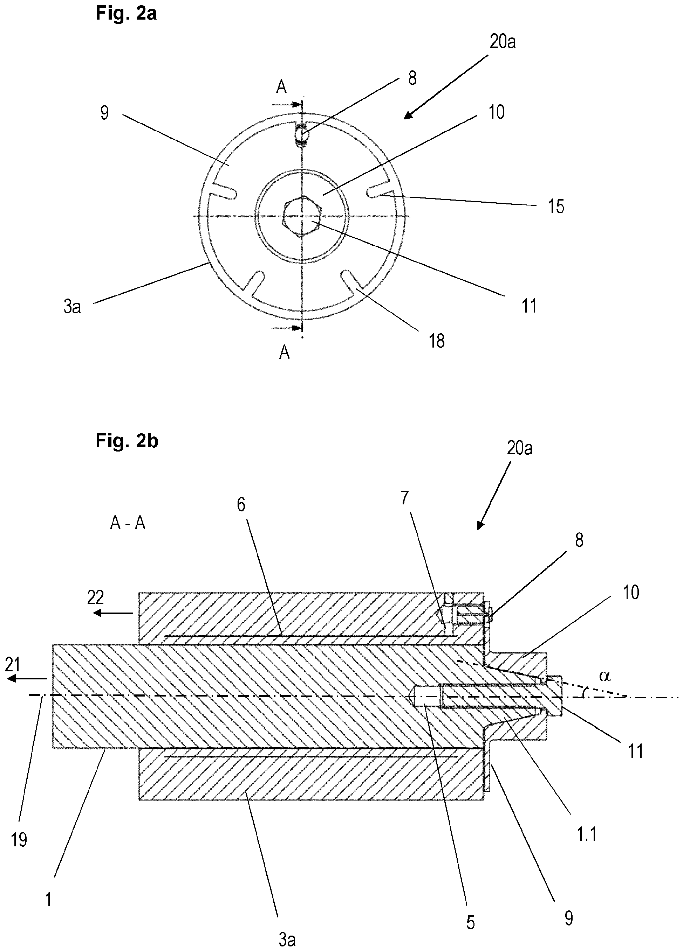

**Fig.2a** shows the front view of the torque limiting coupling 20a. For refilling after release of the coupling the shear tube 8 needs to be replaced by a new one. And therefore, access to the bore of the shear tube 8 is necessary. By loosening the central bolt 11 the shear plate 9 becomes rotatable and can be adjusted in any angular position. After replacing the shear tube 8 the shear plate is fixed by tightening the central bolt 11.

In **Fig.2b** a sectional view along A-A is shown. Built-in in a drive train the first shaft 1 is connected to a load 21, and the coupling ring 3a is connected to a drive or motor 22. In case of a blocking or a too high torque, the shear tube 8 is cut off by the shear plate 9. The fluid flows through the pressure fluid channel 7 out of the pressure fluid chamber 6 and thus the contact pressure between first shaft 1 and coupling ring 3a is reduced. No torque transfer takes place anymore. The coupling 20a is released.

The sectional view shows the conical connector 1.1 of the first shaft with the central bore 5 for the bolt 11 and the conical bushing 10 of the shear plate 9. Preferred is that the conical bushing 10 and the shear plate 9 are made in one piece. Alternatively, they can be made as two parts tightly connected. Due to the tightening torque of the central bolt 11 the conical connection 1.1,10 is pressed together to build up a torque-proof connection between shear plate 9 and first shaft 1. The transferable torque in that conical connection needs to be significantly higher than the transferable torque in the coupling and high enough to cut off the shear tube 8 reliably.

Preferred is the cone angle α less than 35°, especially less than 25°. This upper limit is set in order to reach a higher pressure at a low tightening torque and thus with a smaller bolt. That allows easier assembly and smaller tools for installation.

On the other hand is the lower limit for the cone angle α preferred at least 6°, especially at least 12°. Thereby, it is avoided that the conical connection becomes self-retaining. Self-retention would lead to problems with disassembly and would complicate loosening of the shear plate 9 for rotating them to get access to the shear tube 8 for replacing.

Alternatively to the shown version the inventive solution can also be realized with a conical connection where the conical bushing is forming a conical pin and the conical connector is formed as an appropriate conical cavity in the first shaft.

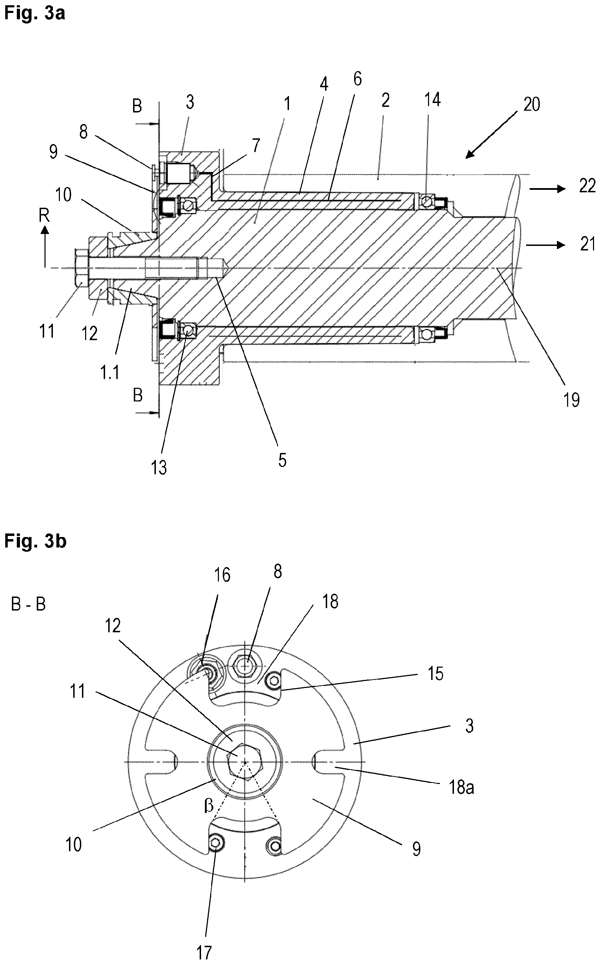

**Fig.3a and 3b** show a preferred embodiment for the torque limiting coupling 20 according to the invention with the first shaft 1 and the second shaft 2 and the coupling ring 3 as a separate component. The first shaft 1 is connected or is designed to be connected to a load 21. The coupling ring 3 is mounted on the cylindrical surface of the first shaft 1. The coupling ring 3 comprises a connection flange and the coupling sleeve 4. The coupling sleeve 4 is positioned in radial direction R between the first shaft 1 and the second shaft 2. The second shaft 2 is designed as hollow shaft or as hub. It is connected or is designed to be connected to a drive 22, for example to the rotor of an electric motor.

The coupling sleeve 4 has an inner surface, which is in contact with the cylindrical surface of the first shaft 1, and an outer surface, which is in areal contact with the second shaft 2. The coupling sleeve 4 includes the pressure fluid chamber 6, which is designed as a narrow annular gap. If this pressure fluid chamber 6 is filled with pressurized fluid the thickness of the sleeve 4 increases and creates the desired contact pressure for the torque transmission between the first shaft 1, the coupling ring 3 and the second shaft 2. If the fluid pressure is relieved there is no torque transmission and the coupling ring 3 slips at the inner surface relatively to the first shaft 1. The torque limiting coupling is released by relieving the fluid pressure.

The shear tube 8 closes the pressure fluid channel 7 and the pressure fluid chamber 6 to maintain the fluid pressure and with it the contact pressure and the ability to transfer torque. The shear tube has a dedicated tip with a breaking point. If the tip is cut off, the pressure fluid channel 7 is open to the ambient, the fluid pressure is relieved and no torque will be transferred over the coupling ring 3.

For a reliable rotation in case of release of the coupling there are two roller bearings 13,14 to stabilize the two shafts 1,2. The first roller bearing 14 between the first shaft 1 and the second shaft 2, and the second roller bearing 13 between the first shaft 1 and the coupling ring 3. Alternatively, the first roller bearing 14 could be also be positioned between the first shaft 1 and the coupling ring 3. Preferred one or both roller bearings 13,14 are designed as ball bearings. Alternatively the roller bearings can be design for example as needle bearings or conical roller bearings or as any other type of roller bearings.

Once again, it is shown that the shear ring 9 is connected to the first shaft 1 by one central bolt 11. The first shaft 1 comprises a conical connector 1.1 formed like a pin and the shear plate 9 comprises a conical bushing 10. The distance ring 12 allows a uniform force application into the bushing 10 and for the bolt 11.

The **Fig.3a** shows a sectional view of the torque limiting coupling 20 along the axis 19. In **Fig.3b** the front view along the line B-B of figure 1 is shown. The mounted shear ring 9 is connected to the first shaft by one central bolt 11. The shear ring 9 comprises several recesses 18 each with a shear edge 15 and is dedicated to release the coupling in case of too high torque. If the torque is higher than the maximum transferable torque of the coupling ring 3, the second shaft 2 and the coupling ring 3 slips at the inner surface relatively to the first shaft 1 and the connected shear ring 9. This leads to that the shear edge 15 of the shear ring 9 cuts off the tip of the shear tube 8 and the fluid pressure will be relieved. In the shown example the shear plate 9 comprises two recesses 18 with enlarged open area with an opening angle β. The opening angle β is especially at least 20°, or preferred at least 40° to give better access to the coupling ring 3 for maintenance or refilling. Especially to give simultaneously access to the pressure fluid port 16 and the shear tube 8. The further recesses 18a are advantageous to give also simultaneously access to further ports or screws, like for example lubrication oil ports. The opposite position of the two recesses 18 and the two recesses 18a are for improved balancing of the shear plate 9.

If the torque is over the maximum limit the coupling can transfer, the first shaft 1 slips relatively to the coupling ring 3 connected with the second shaft 2. The shear ring 9 rotates relatively to the coupling ring 3 and cuts off the tip of the shear tube 8 and due to this the coupling is released. A replacement of the shear tube 8 and a refill of the pressure fluid chamber with pressurized fluid via the pressure fluid port 16 is required after the release.

With the fastening screws 17 the coupling ring 3 is screwed to the second shaft 2. Especially preferred is a set of four screws 17, designed in such a way, that the position of the second shaft 2 on the coupling sleeve 4 can be adjusted by the fastening screws 17. The adjustment essentially takes place in longitudinal direction to adapt to any manufacturing or assembly tolerances. By tightening these screws 17 the second shaft 2 is moved over the coupling sleeve 4. The connection between the lateral surfaces of coupling sleeve 4 and second shaft 2 can be a tapered connection or a crimp connection.

### List of references

- 1: first shaft
- 1.1: conical connector
- 2: second shaft
- 3, 3a: coupling ring
- 4: coupling sleeve
- 5: central bore
- 6: pressure fluid chamber
- 7: pressure fluid channel
- 8: shear tube
- 9: shear ring
- 10: conical bushing
- 11: central bolt
- 12: distance ring
- 13: second rolling bearing
- 14: first rolling bearing
- 15: shear edge
- 16: pressure fluid port
- 17: fastening screws
- 18: recess
- 18a: further recess
- 19: axis
- 20, 20a: torque limiting coupling
- 21: to load
- 22: to motor or drive

- α: angle of the taper
- β: opening angle of the recess
- R: radial direction

## Claims

1. Torque limiting coupling (20,20a) comprising a first shaft (1), a shear plate (9) fixedly connected with the first shaft (1) and a coupling ring (3,3a) arranged coaxially to the first shaft (1),
where the coupling ring (3,3a) comprises a lateral surface which is in contact with a lateral surface of the first shaft (1), where the coupling ring (3,3a) has a double-walled section (3a,4) with an internal annular pressure fluid chamber (6), designed in such a way, that this section increases its radial thickness when the fluid chamber (6) is filled with pressurized fluid and thereby increases the pressure forces and the friction forces between the lateral surfaces of the coupling ring (3,3a) and the first shaft (1) in order to allow torque transfer, and that the coupling ring (3,3a) transfers no torque, when the fluid chamber (6) is not filled with pressurized fluid,
and where the coupling ring (3,3a) comprises a shear tube (8) closing the pressurized fluid chamber (6) to hold the pressure, whereby the shear plate (9) is designed to cut off a tip of the shear tube (8) in order to open the pressure fluid chamber if the first shaft (1) is slipping relatively to the coupling ring (3,3a) which is the case, when the torque is higher than a predefined maximum transferable torque given by the fluid pressure and the design of the coupling,
**characterized in**
**that** the first shaft (1) comprises a conical connector (1.1) and that the shear plate (9) is fixed by one central bolt (11) to the first shaft (1), by pressing a conical bushing (10), which is connected to or part of the shear plate (9), against the conical connector (1.1).

2. Torque limiting coupling (20,20a) according to claim 1
**characterized in**
**that** the shear plate (9) comprises at least two recesses (18) each with a shear edge (15) suitable to cut off the shear tube (8), and preferred in opposite position at the shear plate.

3. Torque limiting coupling (20,20a) according to claim 1 or 2
**characterized in**
**that** the shear plate (9) comprises at least one recess (18) giving an open area with an opening angle β with reference to the axis (19) of at least 20°, preferred of at least 40°.

4. Torque limiting coupling (20,20a) according to one of the previous claims **characterized in**
**that** the conical connector (1.1) has an angle of the taper α. of more than 6°, preferred of more than 12°.

5. Torque limiting coupling (20,20a) according to one of the previous claims **characterized in**
**that** the conical connector (1.1) has an angle of the taper α of less than 35°, preferred of less than 25°.

6. Torque limiting coupling (20,20a) according to one of the previous claims **characterized in**
**that** the conical bushing (10) and the shear plate (9) are made in one piece.

7. Torque limiting coupling (20) according to one of the previous claims **characterized in**
**that** it comprises a second shaft (2) which is connected to the coupling ring (3), where the coupling ring (3) comprises a coupling sleeve (4) which is arranged in radial direction (R) between the first shaft (1) and the second shaft (2), and where the coupling sleeve (4) is the double-walled section with an internal annular pressure fluid chamber (6).

8. Torque limiting coupling (20) according to claim 7
**characterized in**
**that** the length L of the coupling sleeve (4) is between 50 mm and 250 mm, preferred between 80 mm and 180 mm.

9. Torque limiting coupling (20) according to claim 7 or 8
**characterized in**
**that** the thickness of the coupling sleeve (4) in radial direction R is between 10 mm and 30 mm.

10. Torque limiting coupling (20) according to one of the claims 7 to 9
**characterized in**
**that** it comprises a first roller bearing (14) between the first shaft (1) and the second shaft (2) or between the first shaft (1) and the coupling ring (3), and that it comprises a second roller bearing (13) between the first shaft (1) and the coupling ring (3).

11. Torque limiting coupling (20) according to one of the claims 7 to 10
**characterized in**
**that** the second shaft (2) is a hollow shaft of a rotor (21) of an electric motor.

12. Torque limiting coupling (20) according to one of the previous claims
**characterized in**
**that** the first shaft (1) is a driven shaft of an electric motor to be connected to a load (22) or a gear.

13. Torque limiting coupling (20) according to one of the previous claims
**characterized in**
**that** it is designed to be used in the main drive train of a tunnel boring machine.

## Patentansprüche

1. Drehmomentbegrenzungskupplung (20, 20a), umfassend eine erste Welle (1), eine fest mit der ersten Welle (1) verbundene Scherplatte (9) und einen koaxial zur ersten Welle (1) angeordneten Kupplungsring (3, 3a),
wobei der Kupplungsring (3, 3a) eine Seitenfläche umfasst, die mit einer Seitenfläche der ersten Welle (1) in Kontakt steht, wobei der Kupplungsring (3, 3a) einen doppelwandigen Abschnitt (3a, 4) mit einer inneren ringförmigen Druckflüssigkeitskammer (6) aufweist, der so konzipiert ist, dass dieser Abschnitt seine radiale Dicke vergrößert, wenn die Flüssigkeitskammer (6) mit Druckflüssigkeit gefüllt ist und dadurch die Druckkräfte und die Reibungskräfte zwischen den Seitenflächen des Kupplungsrings (3, 3a) und der ersten Welle (1) erhöht, um eine Drehmomentübertragung zu ermöglichen, und dass der Kupplungsring (3, 3a) kein Drehmoment überträgt, wenn die Flüssigkeitskammer (6) nicht mit Druckflüssigkeit gefüllt ist,
und wobei der Kupplungsring (3, 3a) ein Scherrohr (8) umfasst, das die Druckflüssigkeitskammer (6) verschließt, um den Druck zu halten, wobei die Scherplatte (9) dazu konzipiert ist, eine Spitze des Scherrohrs (8) abzuschneiden, um die Druckflüssigkeitskammer zu öffnen, wenn die erste Welle (1) relativ zum Kupplungsring (3, 3a) rutscht, was der Fall ist, wenn das Drehmoment höher als ein vordefiniertes maximal übertragbares Drehmoment ist, das durch den Flüssigkeitsdruck und die Bauart der Kupplung gegeben ist,
**dadurch gekennzeichnet,**
**dass** die erste Welle (1) ein konisches Verbindungsstück (1.1) umfasst und dass die Scherplatte (9) durch einen mittigen Bolzen (11) an der ersten Welle (1) befestigt ist, indem eine konische Buchse (10), die mit der Scherplatte (9) verbunden oder ein Teil davon ist, gegen das konische Verbindungsstück (1.1) gedrückt wird.

2. Drehmomentbegrenzungskupplung (20, 20a) gemäß Anspruch 1,
**dadurch gekennzeichnet,**
**dass** die Scherplatte (9) mindestens zwei Aussparungen (18) mit jeweils einer Scherkante (15) umfasst, die geeignet sind, das Scherrohr (8) abzuschneiden, und bevorzugt in gegenüberliegender Position an der Scherplatte angeordnet sind.

3. Drehmomentbegrenzungskupplung (20, 20a) gemäß Anspruch 1 oder 2,
**dadurch gekennzeichnet,**
**dass** die Scherplatte (9) mindestens eine Aussparung (18) umfasst, die einen geöffneten Bereich mit einem Öffnungswinkel β in Bezug auf die Achse (19) von mindestens 20°, vorzugsweise von mindestens 40°, ergibt.

4. Drehmomentbegrenzungskupplung (20, 20a) gemäß einem der vorhergehenden Ansprüche,
**dadurch gekennzeichnet,**
**dass** das konische Verbindungsstück (1.1) einen Kegelwinkel α von mehr als 6°, vorzugsweise von mehr als 12°, aufweist.

5. Drehmomentbegrenzungskupplung (20, 20a) gemäß einem der vorhergehenden Ansprüche,
**dadurch gekennzeichnet,**
**dass** das konische Verbindungsstück (1.1) einen Kegelwinkel α von weniger als 35°, vorzugsweise von weniger als 25°, aufweist.

6. Drehmomentbegrenzungskupplung (20, 20a) gemäß einem der vorhergehenden Ansprüche,
**dadurch gekennzeichnet,**
**dass** die konische Buchse (10) und die Scherplatte (9) aus einem Stück gefertigt sind.

7. Drehmomentbegrenzungskupplung (20) gemäß einem der vorhergehenden Ansprüche,
**dadurch gekennzeichnet,**
**dass** sie eine zweite Welle (2) umfasst, die mit dem Kupplungsring (3) verbunden ist, wobei der Kupplungsring (3) eine Kupplungsmuffe (4) umfasst, die in radialer Richtung (R) zwischen der ersten Welle (1) und der zweiten Welle (2) angeordnet ist, und wobei die Kupplungsmuffe (4) das doppelwandige Profil mit einer inneren ringförmigen Druckflüssigkeitskammer (6) ist.

8. Drehmomentbegrenzungskupplung (20) gemäß Anspruch 7,
**dadurch gekennzeichnet,**
**dass** die Länge L der Kupplungsmuffe (4) zwischen 50 mm und 250 mm, vorzugsweise zwischen 80 mm und 180 mm beträgt.

9. Drehmomentbegrenzungskupplung (20) gemäß Anspruch 7 oder 8,
**dadurch gekennzeichnet,**
**dass** die Dicke der Kupplungsmuffe (4) in radialer Richtung R zwischen 10 mm und 30 mm beträgt.

10. Drehmomentbegrenzungskupplung (20) gemäß einem der Ansprüche 7 bis 9,
**dadurch gekennzeichnet,**
**dass** sie ein erstes Wälzlager (14) zwischen der ersten Welle (1) und der zweiten Welle (2) oder zwischen der ersten Welle (1) und dem Kupplungsring (3) umfasst und dass sie ein zweites Wälzlager (13) zwischen der ersten Welle (1) und dem Kupplungsring (3) umfasst.

11. Drehmomentbegrenzungskupplung (20) gemäß einem der Ansprüche 7 bis 10,
**dadurch gekennzeichnet,**
**dass** die zweite Welle (2) eine Hohlwelle eines Rotors (21) eines Elektromotors ist.

12. Drehmomentbegrenzungskupplung (20) gemäß einem der vorhergehenden Ansprüche,
**dadurch gekennzeichnet,**
**dass** die erste Welle (1) eine Abtriebswelle eines Elektromotors ist, die mit einer Last (22) oder einem Getriebe zu verbinden ist.

13. Drehmomentbegrenzungskupplung (20) gemäß einem der vorhergehenden Ansprüche,
**dadurch gekennzeichnet,**
**dass** sie für den Einsatz im Hauptantriebsstrang einer Tunnelbohrmaschine konzipiert ist.

## Revendications

1. Accouplement de limitation de couple (20, 20a) comprenant un premier arbre (1), une plaque de cisaillement (9) reliée de manière fixe au premier arbre (1) et une bague d'accouplement (3, 3a) disposée coaxialement au premier arbre (1),
la bague d'accouplement (3, 3a) comprenant une surface latérale qui est en contact avec une surface latérale du premier arbre (1), la bague d'accouplement (3, 3a) comportant une section à double paroi (3a, 4) avec une chambre à fluide sous pression annulaire interne (6), conçue de sorte que cette section augmente son épaisseur radiale lorsque la chambre à fluide (6) est remplie de fluide sous pression et augmente ainsi les forces de pression et les forces de frottement entre les surfaces latérales de la bague d'accouplement (3, 3a) et le premier arbre (1) afin de permettre un transfert de couple, et que la bague d'accouplement (3, 3a) ne transfère aucun couple lorsque la chambre à fluide (6) n'est pas remplie de fluide sous pression,
et la bague d'accouplement (3, 3a) comprenant un tube de cisaillement (8) fermant la chambre à fluide sous pression (6) pour maintenir la pression, la plaque de cisaillement (9) étant conçue pour couper une pointe du tube de cisaillement (8) afin d'ouvrir la chambre à fluide sous pression si le premier arbre (1) glisse par rapport à la bague d'accouplement (3, 3a), ce qui est le cas lorsque le couple est supérieur à un couple transférable maximum prédéfini, donné par la pression de fluide et la conception de l'accouplement,
**caractérisé en ce**
**que** le premier arbre (1) comprend un raccord conique (1.1) et que la plaque de cisaillement (9) est fixée par un boulon central (11) au premier arbre (1), en pressant une douille conique (10), qui est reliée à la plaque de cisaillement (9) ou en fait partie, contre le raccord conique (1.1).

2. Accouplement de limitation de couple (20, 20a) selon la revendication 1
**caractérisé en ce**
**que** la plaque de cisaillement (9) comprend au moins deux évidements (18) comportant chacun un bord de cisaillement (15) pouvant couper le tube de cisaillement (8), de préférence en position opposée au niveau de la plaque de cisaillement.

3. Accouplement de limitation de couple (20, 20a) selon la revendication 1 ou 2
**caractérisé en ce**
**que** la plaque de cisaillement (9) comprend au moins un évidement (18) donnant une surface ouverte avec un angle d'ouverture β par rapport à l'axe (19) d'au moins 20°, de préférence d'au moins 40°.

4. Accouplement de limitation de couple (20, 20a) selon l'une quelconque des revendications précédentes
**caractérisé en ce**
**que** le raccord conique (1.1) présente un angle de conicité α supérieur à 6°, de préférence supérieur à 12°.

5. Accouplement de limitation de couple (20, 20a) selon l'une quelconque des revendications précédentes
**caractérisé en ce**
**que** le raccord conique (1.1) présente un angle de conicité α inférieur à 35°, de préférence inférieur à 25°.

6. Accouplement de limitation de couple (20, 20a) selon l'une quelconque des revendications précédentes
**caractérisé en ce**
**que** la douille conique (10) et la plaque de cisaillement (9) sont fabriquées d'un seul tenant.

7. Accouplement de limitation de couple (20) selon l'une quelconque des revendications précédentes
**caractérisé en ce**
**qu'**il comprend un second arbre (2) qui est relié à la bague d'accouplement (3), la bague d'accouplement (3) comprenant un manchon d'accouplement (4) qui est disposé dans la direction radiale (R) entre le premier arbre (1) et le second arbre (2), et le manchon d'accouplement (4) étant la section à double paroi avec une chambre à fluide de pression annulaire interne (6).

8. Accouplement de limitation de couple (20) selon la revendication 7
**caractérisé en ce**
**que** la longueur L du manchon d'accouplement (4) est comprise entre 50 mm et 250 mm, de préférence entre 80 mm et 180 mm.

9. Accouplement de limitation de couple (20) selon la revendication 7 ou 8
**caractérisé en ce**
**que** l'épaisseur du manchon d'accouplement (4) dans la direction radiale R étant comprise entre 10 mm et 30 mm.

10. Accouplement de limitation de couple (20) selon l'une quelconque des revendications 7 à 9
**caractérisé en ce**
**qu'**il comprend un premier roulement à rouleaux (14) entre le premier arbre (1) et le second arbre (2) ou entre le premier arbre (1) et la bague d'accouplement (3), et qu'il comprend un second roulement à rouleaux (13) entre le premier arbre (1) et la bague d'accouplement (3).

11. Accouplement de limitation de couple (20) selon l'une quelconque des revendications 7 à 10
**caractérisé en ce**
**que** le second arbre (2) est un arbre creux d'un rotor (21) d'un moteur électrique.

12. Accouplement de limitation de couple (20) selon l'une quelconque des revendications précédentes
**caractérisé en ce**
**que** le premier arbre (1) est un arbre mené d'un moteur électrique à relier à une charge (22) ou à un engrenage.

13. Accouplement de limitation de couple (20) selon l'une quelconque des revendications précédentes
**caractérisé en ce**
**qu'**il est conçu pour être utilisé dans la chaîne cinématique principale d'un tunnelier.
